# EUROPEAN PATENT SPECIFICATION

(11) **EP 1 452 082 B1**
(45) Date of publication and mention of the grant of the patent: **22.07.2009**
(21) Application number: 04002209.7
(22) Date of filing: 02.02.2004
(51) Int. Cl.: A01B 63/10

(54) **Lifting unit for the lower links of a tractor**
Unterlenkerhebeeinheit für Schlepper
Unité de soulèvement pour bras inférieur de tracteur

(30) Priority: 27.02.2003 GB 0304432
(43) Date of publication of application: 01.09.2004
(73) Proprietor: AGCO GmbH, 87616 Marktoberdorf (DE)
(72) Inventor: Girstenbrei, Erich, 87640 Biessenhofen (DE); Knobloch, Jürgen, 87674 Ruderatshofen (DE); Prieler, Alexander, D-50529 Pullheim-Geyen (DE); Wolfle, Gottlieb, D-87616 Marktoberdorf (DE); Muhlratzer, Johann, 83555 Gars-Bahnhof (DE)
(74) Representative: Morrall, Roger

(56) References cited:
- DE-A- 2 854 188
- DE-A- 3 423 194
- DE-A- 3 607 257
- DE-A- 3 906 099
- FR-A- 1 280 050

## Description

The invention relates to a lifting unit for the lower links of a hitch of an agricultural tractor, comprising a pressure medium cylinder arrangement effecting synchronous action of the lower links, the pressure medium cylinder arrangement including first and second lifting cylinders supported at the side of the tractor directly or indirectly and cooperating with the associated lower links in a direct or indirect way.

A lifting unit including the above mentioned features is known from German Patent Application DE-OS 199 39 967 A1. With this lifting unit, it is desired among other things to synchronously pivot the lower links when changing their position, even in the case of the load being unevenly distributed. For this purpose, a control unit is associated with each bottom link, the control unit controlling the supply of pressure medium to the lifting cylinder of the respective lower link by means of the deviation in the signal representing the respective position of the lower link and a predetermined control input. However, in this arrangement, depending on the type of control unit used, a relatively large deviation is necessary to activate the control unit. Since the deviation of both control units during lifting of a tool may differ, it is not necessarily ensured that movement and position of the lower links are synchronised at any point in time. Total uniform movement of both lower links may not be realised in this way.

Apart from the substantial construction and cost expenditure for the required control units and the position sensing elements of the lower links, the known lifting unit has the disadvantage that it is not possible to shift a part of the load of one lower link to the lifting cylinder of the other lower link. In extreme cases in which one of the lower links supports the entire load, the lifting cylinder pivoting this lower link has to be designed to cope with the entire load. Since either of the lifting cylinders could be subjected to the entire load, each lifting cylinder must have a diameter, and be operable at a hydraulic pressure, which can cope with such an eventuality. The lifting cylinders are therefore oversized for the majority of cases of application. Furthermore, it is possible to imagine cases of application in which one of the lower links supports a load being downwardly directed, while an upwardly directed load engages the other lower link. The control unit of the known lifting unit is not capable of realizing synchronous movement of the lower links in this situation without substantial change to the control strategy.

A hydraulic adjustment unit for height-adjustable agricultural implements is known from German Patent DE-PS 21 40 882. The load acting upon a single section of the apparatus is transmitted to a first cylinder by associated second and third cylinders being hydraulically arranged in series with the first cylinder. A hydraulic arrangement including hydraulic cylinders arranged in a series is to be understood herein such that the pressure medium exiting a cylinder located upstream is fed to a downstream cylinder. In this way, only the first cylinder has to be sized with respect to the entire load of the implement, while the other cylinders only have to be sized with respect to the load of the sections of the apparatus being associated with them and being located downstream. When the graduation of the diameters of the cylinders and their operational stroke are correctly chosen, there is synchronous adjustment of the single sections of the apparatus. (However, again, one of the cylinders has a substantial diameter, which is too large for use in a lifting unit for the lower links of an agricultural tractor).

Furthermore, a lifting unit for vehicles is known from JP Abstract 000533388A, the lifting unit includes a lifting table engaged by four lifting cylinders at four different locations. The cylinders are coordinated to form two hydraulically parallel pairs, the cylinders forming a pair being located hydraulically one after the other. A hydraulic parallel arrangement is to be understood such that the respective cylinders are commonly supplied with pressure medium from a source of pressure medium. To realise synchronous adjustment of the lifting table even during unsymmetrical loading, the cylinders of a pair are arranged in a crosswise manner by which the desired effect is achieved. Direct application of this cylinder arrangement in lifting units of agricultural tractors is not possible due to reasons being related to the required space, and due to reasons being especially present in lifting units including pivotal lower links.

It is the object of the present invention to provide a lifting unit of the kind described above in which the lower links are hydraulically synchronised, which has a technically simple structure and which may be easily mounted in a space efficient manner.

Thus, according to the present invention there is provided a hitch assembly comprising a hitch assembly comprising a pair of spaced apart lower links, each lower link having respective first and second ends, wherein the first end is pivotally attached to a lower link mount and wherein the second end is free and includes an attachment member, a pair of spaced apart lift actuators connected one to each link, the assembly being characterised in that a pair of spaced apart assist actuators are also connected one to each link, wherein one of the lift actuators and one of the assist actuators are each associated with the first lower link and the other lift actuator and assist actuator are each associated with the second lower link, the lift actuator associated with the first lower link being hydraulically connected in series with the assist actuator associated with the second lower link, and the lift actuator associated with the second lower link being hydraulically connected in series with the assist actuator associated with the first lower link.

Due to the above cross connection of the lift actuator of one link with the assist actuator of the other link, it is possible to realise exact synchronous movement of the lower links independent from the distribution of the load of the implement onto the lower links since any asynchronous movement is prevented by the mutually locking actuators.

Additional details and features of the invention are described in the dependent claims. The mechanical serial connection of the lifting actuators and assist cylinders actuators allows for arrangement of the actuators without problem and clear transfer of the forces of the actuators acting upon the lower links. In this way, tensions and space-related problems are prevented. These problems may occur in a mechanical parallel arrangement of the cylinders due to the pivoting lower links.

Due to the connection of the lifting actuator and the assist actuator by a transmitting element and the addition of their changes of length (strokes) resulting therefrom, comparatively short actuators may be used. These may be located at different positions of the lifting unit if the transmitting element is a lever pivotally connected to the tractor. This does not only simplify their arrangement, but it may also be used to increase their effective stroke by means of the possible lever transmission. However, the lifting actuators and the assist actuators may also be combined to form one structural unit to decrease the manufacturer expenditure.

In an especially simple structural unit, a piston with a piston rod is associated with each actuator of the structural unit, the piston rods exiting at opposite sides of the structural unit and including coupling means for connection to the apparatus and load, respectively.

In another alternative construction for a combined lift and assist actuator a common piston rod with a piston at each end is needed. This is a low cost arrangement.

A horizontal pivotal movement of the lower links without tensions occurring in the lifting unit is realised by an embodiment in which the lifting actuators and the assist actuators are supported at the rear of the vehicle. In this arrangement each assist actuator engages its lower link on a line connecting the lift cylinder connection point with that link with the link pivot connection on the tractor.

### Brief Description of the Drawings

In the drawings, which illustrate exemplary embodiments of the invention:
- Fig 1.: illustrates a first exemplary embodiment of a hitch assembly in accordance with the invention in which the lifting cylinders and the assist cylinders are connected to a pair of lift arms;
- Fig 2.: illustrates a second exemplary embodiment of a hitch assembly in accordance with the invention in which the lift and assist cylinders are combined into an integral structural unit;
- Fig 3.: illustrates a section view of the integral structural unit shown in Fig 2;
- Fig 4.: illustrates a sectional view of a further example of an integral structural unit;
- Fig 5.: illustrates a plan of a hydraulic control arrangement for the hitch assembly of Fig 2; and
- Fig 6.: illustrates a third exemplary embodiment of a hitch assembly in accordance with the invention in which the lift and assist cylinders directly engaging the lower links,

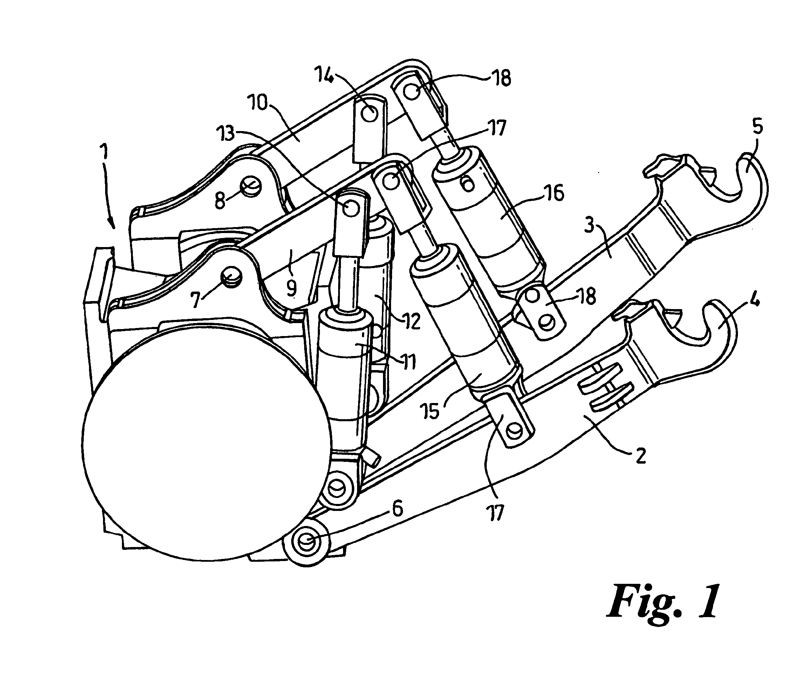

The lifting unit or hitch assembly illustrated in Fig. 1 is arranged on the rear 1 of a tractor (not illustrated). The lifting unit itself is also only illustrated to an extent being necessary for understanding the invention. The lifting unit includes two lower links 2, 3 pivotally connected at location 6 to the rear 1. The end portions of the lower links 2, 3 at the side of the tractor are located at a low level. The lower links 2, 3 substantially extend in a rear direction as seen in the longitudinal direction of the vehicle. The other end portions 4, 5 of the lower links 2, 3 are adapted to receive coupling members of tools to be carried by the lifting unit. A lifting arm 9, 10 is pivotally supported on the rear 1 at the pivot locations 7, 8, above the pivot location 6 of each lower link 2, 3. The lifting arm 9, 10 also substantially extends in a rearward direction as seen in the longitudinal direction of the vehicle. Lifting cylinders 11, 12 are supported at the rear 1, adjacent to the pivot locations 6 of the lower links 2, 3 their other ends engaging the locations 13, 14 at the lifting arm 9, 10 to pivot the lifting arm 9, 10.

Another cylinder engages the free end of the lifting arm 9, 10. In the following, this cylinder will be designated as the successive or assist cylinder 15, 16. The assist cylinder 15, 16 has a hinged connection to the lower links 2, 3 by a bifurcated head 17, 18. The lifting cylinders 11, 12 and the assist cylinders 15, 16 approximately have the same maximum stroke. The cylinders 11, 15 and 12, 16 are mechanically arranged in series, and therefore each change of length of a cylinder effects a pivotal movement of the associated lower links 2, 3 during actuation, the changes of lengths geometrically summing up. The change of length is further increased by the lever transmissions of the lifting arms 9, 10. The lever transmission depends on the distance between the pivot locations 13, 14 of the lifting cylinders 11, 12 and the pivot locations 17, 18 of the lifting cylinders 15, 16 at the lifting arm 9, 10. In the described exemplary embodiment, the lifting cylinders are arranged close to the vehicle. Without substantially departing from the spirit of the present invention, the lifting cylinders may be easily interchanged with the successive cylinders, meaning they may be arranged comparatively far away from the vehicle.

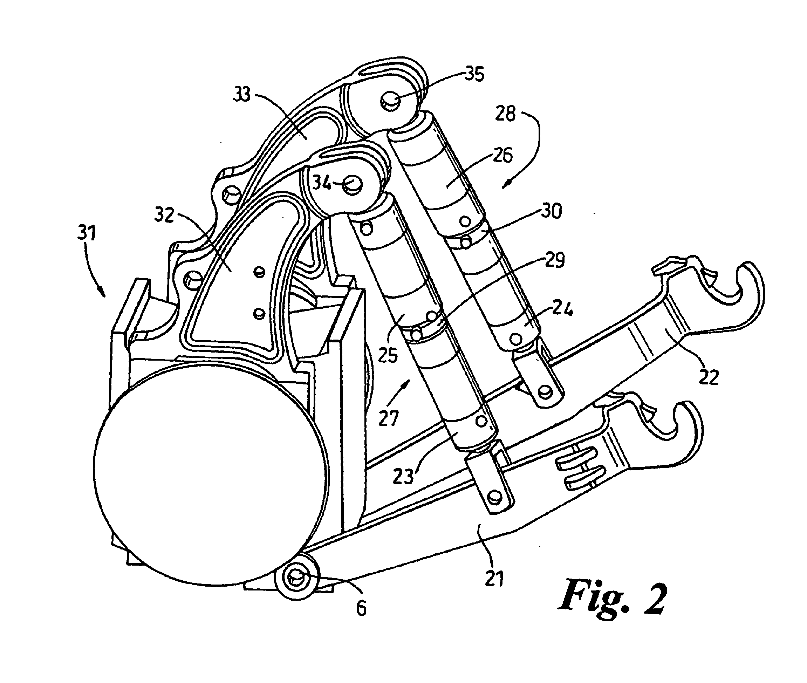

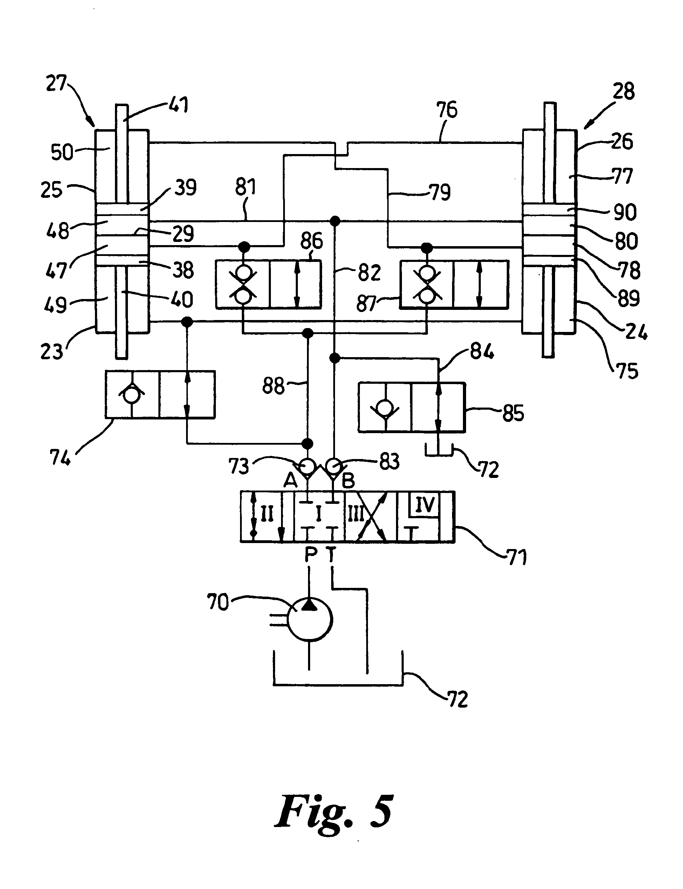

Pressurization of the cylinders 11, 12 15, 16 is realised as illustrated in Fig.5, and is explained in greater detail with respect to Fig.2. The two lifting cylinders 11, 12 are hydraulically arranged to be parallel, i.e. they are simultaneously supplied by a common pressure medium source via a 4/4 way valve. It is important that the assist cylinders 15, 16 are arranged in a crosswise manner, i.e. the assist cylinder 16 of the lifting cylinder 11 engaging the lower link 2 engages the other lower link 3. The assist cylinder 15 of the lifting cylinder 12 engaging the lower link 3 likewise engages the lower link 2. Due to the fact that the assist cylinders 15, 16 and the associated lifting cylinders 12, 11 are hydraulically arranged one after the other, pressure medium displaced from the lifting cylinders 11, 12 during their actuation in the sense of lifting the lower links 2, 3 is fed to the associated assist cylinder 16, 15 at the other lower link. Each lifting cylinder 11, 12 is designed for half of the entire load of the tool to be carried such that both lifting cylinders have the same relatively small diameter. To prevent tensions occurring in the lifting unit, the diameter and the maximum working stroke of the successive cylinders are matched with the relevant size of the lifting cylinders. In this way, the lower links 2, 3 move in a synchronous way during pressurization of the lifting cylinders 11, 12 as long as there is no substantial loss of pressure medium at the assist cylinders 15, 16. As a result, this corresponds to a hydraulic stroke wave replacing the mechanical stroke wave which has been so far required for synchronization of the movements of the lower links 2, 3. The loss of pressure medium usually occurring in such apparatuses is of no importance in this context.

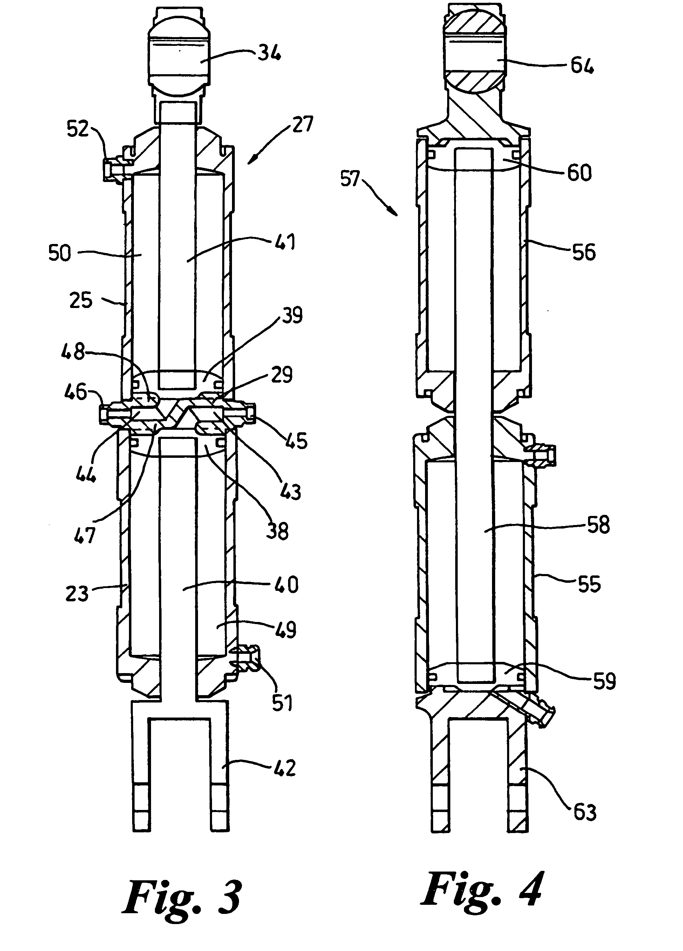

The exemplary embodiment illustrated in Fig. 2 substantially corresponds to the one of Fig. 1. In contrast thereto, the lifting cylinders 23, 24 and successive or assist cylinders 25, 26 being associated with the respective lower links 21, 22 are coordinated to form cylinder units 27, 28 of the same size. The successive cylinders 25, 26 are arranged above the lifting cylinders 23, 24 and are interconnected by an intermediate plate 29, 30. Such a cylinder unit is illustrated in Fig. 3, and another embodiment is illustrated in Fig. 4. It is possible without problem to arrange the successive cylinders 25, 26 below the lifting cylinders 23, 24. Additionally, the cylinder units 27, 28 are connected to support structures 32, 33 of the tractor chassis member 31. The free end of each support structure 32, 33 is bifurcated and receives a ball joint 34, 35 of the successive cylinders 25, 26.

In the exemplary embodiment according to Fig. 3 in which the lifting cylinder 23 an the successive cylinder 25 form a cylinder unit 27, the cylinders are interconnected at the side of the cylinder tube by the common intermediate plate 29, 30 by welding. The piston rods 40, 41 carrying the pistons 38, 39 exit at opposite faces of the cylinder unit 27. The piston rods 40, 41 include connections 42, 34 for connection with the associated lower link 21 and for pivotal connection with the bearing block 32 at the side of the tractor and being arranged there above. Conduits 43, 44 with connections 45, 46 are integrated in the intermediate plate 29, respectively. The conduits 43, 44 serve to connect the chamber 47 of the lifting cylinder 23 at the side of the piston with the chamber of the associated assist cylinder 26 at the side of the piston rod (see Fig. 2) and to feed/discharge pressure medium to/from the chamber 48 of the successive cylinder 25 at the side of the piston, respectively. Furthermore, the chamber 49 of the lifting cylinder 23 at the side of the piston rod as well as the chamber 50 of the assist cylinder 25 at the side of the piston rod includes a pressure medium connection 51, 52.

In the exemplary embodiment of Fig. 4, lifting cylinders 55 and successive or assist cylinders 56 of a cylinder unit 57 are interconnected by a common piston rod 58. Pistons 59, 60 are attached to opposing ends of the piston rod 58. The cylinder tubes 61, 62 of the lifting cylinder 55 and of the successive cylinder 56 are arranged to be movable on the piston rod 58. The cylinder tubes 61, 62 at their faces include connections 63, 64 for linkage to the respective lower link and the support structure arranged thereabove and being coupled to the tractor. Furthermore, the cylinders 55, 56 include pressure medium connections arranged in the same manner as for the cylinder unit according to Fig. 3. Thus, actuation of these cylinders is realised in the same way as in the cylinders according to Fig. 3.

Actuation of the cylinders according to Figs.1 and 2 is realised in accordance with the hydraulic layout plan illustrated in Fig. 5. The cylinder units 27, 28 illustrated in Figs. 2 and 3 can be replaced by cylinder units 57 according to Fig. 4. To prevent repetitions, only the actuation of the cylinder units 27, 28 will be described in the following.

A pump 70, provides a source of pressure medium and is connected to the connection P of a distributing valve 71 including four connections P, T, A and B. This distributing valve 71 has four positions I, II, III and IV. The connection T is connected to a pressure medium container 72. Connection A is connected to the chambers 49, 75 of the lifting cylinders 23, 24 at the side of the piston rod via a controllable check valve 73 closing towards the pump and a distributing valve 74 having a free passage position and a switching position having the effect of a check valve. The chamber 47 of the lifting cylinder 23 at the side of the piston is connected to the chamber 77 of its successive or assist cylinder 26 at the side of the piston rod via a conduit 76. In the same way, the chamber 78 of the lifting cylinder 24 at the side of the piston is connected to the chamber 50 of the successive or assist cylinder 25 at the side of the piston rod via a conduit 79. The chambers 48, 80 of both successive cylinders 25, 26 at the side of the piston are connected to the connection B via conduits 81, 82 and a controllable check valve 83 closing towards the container 72. A conduit 84 branches off from the conduit 82 between the check valve 83 and the successive cylinders 25, 26. The conduit 84 bypasses the distributing valve 71 to the container 72. A distributing valve 85 having free passage position and a switching position having the effect of a check valve is located in the conduit 84. Each cylinder unit 27, 28 is further associated with a distributing valve 86, 87 having free passage switching position and a switching position locking in both directions. The distributing valves 86, 87 are located between the conduit 76 and 79, respectively, and a conduit 88 leading to the connection A.

Both connections A and B are locked in the switching position I of the distributing valve 71 such that there is no pressure medium supply to the cylinders of the cylinder units 27, 28 and no discharge of pressure medium to the container 72 via the distributing valve 71. Two functions are available in this switching position:

### The lower link is locked:

The lifting unit with the lower links 21, 22 is rigid and the tool is being moved at the present level when distributing valve 85 has been switched to reach its locking position.

### The lower links are moveable to a certain extent:

When the distributing valve 85 has been switched to reach passage position, there is transfer of pressure medium towards and away form the container 72. Due to the fact that the successive cylinders 25, 26 are not hydraulically fixed, the lower links 21, 22 may freely follow the movements being communicated from unevenness of the ground, for example, to the tool.

In its switching position II, the connection A is connected to the connection P and the connection B to the connection T. A plurality of functions is executable in this switching position.

### Lifting the lower link:

During this function, pressure medium streams through the check valve 73, the distributing valve 74 being switched to reach the passage position into the chambers 49, 75 of the lifting cylinders 23, 24 at the side of piston rod. The pistons 38, 89 together with the lower links 21, 22 being pivotally connected therewith are lifted. At the same time, pressure medium displaced from the pressure chambers 47, 78 at the side of the piston rod streams into the pressure chambers 50, 77 of the associated successive cylinders 25, 26 at the side of the piston rod. A lifting movement of one of the lifting cylinders 23, 24 does not only effect the directly connected lower link 21, 22 but also, indirectly, the other lower link 22, 21. In this way, each lifting cylinder 23, 24 takes over part of the load of the other lower link by its successive cylinders 26, 25 and the movement of the lower links 21, 22 is achieved in a synchronous way. The chambers 48, 80 of the successive cylinders 25, 26, at the side of the piston are connected to the connection B of the distributing valve 71 via conduits 81, 82 such that pressure medium being displaced from these chambers may flow towards the container 72.

### Stroke variation exclusively with the right lower link 22 being pressed in an upward direction:

This function is required to be capable of operating a carried tool in a defined inclined position. With this function, pressure medium streams through the check valve 73, the conduit 88, the distributing valve 86 having its passage position and the conduit 76 into the chamber 47 of the lifting cylinder 23 at the side of the piston as well as into the chamber 77 of the successive cylinder 26 at the side of the piston rod. The piston rod 40 is extended with respect to the lifting cylinder 23, and the pressure displaced thereby is pushed into the chamber 75 of the lifting cylinder 24 at the side of the piston rod. Due to the fact that the chamber 48 of the successive cylinder 25 at the side of the piston is connected to the container 72 by the distributing valve 85, pressure medium may stream from the chamber 78 of the lifting cylinder 24 at the side of the piston into the chamber 50 of the successive cylinder 25 at the side of the piston rod, and the piston rod 41 may thus move inwardly with respect to the successive cylinder 25. During this process, the length of the cylinder unit 27 remains constant since the relative movement of the piston rods 40, 41 are identical. Due to the fact that the chamber 80 of the successive cylinder 26 at the side of the piston rod is also connected to the container 72, the piston rods of both cylinders 24, 26 move inwardly, and the entire length of the cylinder unit 28 decreases. The respective lower link 22 is pressed in an upward direction, and the tool is pivoted. After reaching the desired difference concerning strokes and the desired pivoted position of the tool, respectively, the distributing valve 86 is switched into its locking position, and its then possible to execute the above described function "lifting the lower link" or the below described functions "lowering the lower link" or "eliminating the difference concerning strokes".

### Difference concerning strokes exclusively with the left lower link 21 being pressed in an upward direction:

This function corresponds to the above described function with the exception of the carried tool being pivoted in the opposite direction. During this function, pressure medium streams through the check valve 73, the conduit 88, the distributing valve 87 which is switched into the passage position and the conduit 79, into the chamber 78 of the lifting cylinder 24 at the side of the piston as well as into the chamber 50 of the successive cylinder 25 at the side of the piston rod. The piston rod is extended with respect to the lifting cylinder 24, and the pressure medium displaced thereby is pushed into the chamber 49 of the lifting cylinder 23 at the side of the piston rod. Due to the fact that the chamber 80 of the successive cylinder 26 at the side of the piston rod is connected to the container 72 by the distributing valve 85, pressure medium may stream form the chamber 47 of the lifting cylinder 23 at the side of the piston rod into the chamber 77 at the side of the piston rod, and consequently the piston rod moves in an inward direction with respect to the successive cylinder 26. During this process, the length of the cylinder unit 28 remains constant since the relative movements of the piston rods of both cylinders 24, 26 are identical. Due to the fact that the chamber 48 of the successive cylinder 25 at the side of the piston is also connected to the container 72, the piston rods of both cylinders 23, 25 move in an inward direction, and the entire length of the cylinder 27 decreases. The respective lower link 21 is then pressed in an upward direction, and the tool is pivoted in an opposite direction compared to the above described function. After having reached the desired difference concerning strokes and the desired pivoted position, respectively, the distributing valve 87 is switched to reach its locking position, and it is again possible to execute the above described function "lifting the lower link" or the below described functions "eliminating the difference concerning strokes" or "lowering the lower link".

### Eliminating the differences concerning strokes

This function makes it possible to cancel a previously adjusted difference concerning strokes. The lower links 21, 22 will then attain exactly the same level above the ground. For this purpose, the chambers 49, 75 of the lifting cylinders 23, 24 at the side of the piston rod are pressurised by pressure medium from the distributing valve being switched to the passage position. At the same time, the chamber 78 of the lifting cylinder 24 at the side of the piston as well as the chamber 50 of its successive cylinder 25 at the side of the piston rod pressurised by pressure medium from the distributing valve 87 in its passage position and the conduit 79. The same applies to the chamber 47 of the lifting cylinder 23 at the side of the piston and the chamber 77 of the successive cylinder 26 at the side of the piston rod via the distributing valve 86 which has also been switched to reach its passage position and the conduit 76. During this process, the two lower links 21, 22 reach half the height of the stroke height which may be realised with the cylinder units 27, 28.

The same result may be achieved with the distributing valve 71 being switched to switching position III. Further details will be explained with respect to this switching position.

In the switching position III of the distributing valve 71, the connections P and B as well as the connections T and A are interconnected. In this case, three functions are available.

### Difference convening strokes exclusively with an elongation of the left cylinder unit 27:

This function may also be used to operate a carried tool in a defined inclined position. With this function, the chambers 48, 80 of the successive cylinder 25, 26 are pressurised via the check valve 83 and the conduits 82, 81. The chamber 78 at the side of the piston and the chamber 50 at the side of the piston are connected with the container 72 and the conduit 88, the distributing valve 87 having its passage position, such that the piston 39 moves in an upward direction with respect to the successive cylinder 25. The piston 90 also moves in an upward direction with respect to the successive cylinder 26, pushing pressure medium from the chamber 77 at the side of the piston rod into the chamber 47 at the side of the piston via the conduit 76. The piston 38 moves in a downward direction, pushing pressure medium from the chamber 49 into the chamber 75 such that the piston 89 moves in an upward direction. Due to the fact that the amount of pressure medium being displaced from the chamber 77 during this process equals the amount of pressure medium being introduced into the chamber 75, the distance between the pistons 89, 90 moving with respect to their cylinders remains constant. Thus, the entire length of the cylinder unit 28 also remains constant. On the other hand, the entire length of cylinder unit 27 has increased such that the lower link 21 is pressed in a downward direction. After having reached the desired difference of strokes and the desired pivot position, respectively, the distributing valve 87 is switched into its locking position, and it is now possible to execute other functions as for example "lifting the lower link", "lowering the lower link" or "eliminating the difference of strokes" by respectively controlling the distributing valves.

### Pressure the lower links downwards:

This function makes it possible to actively press the lower links 21, 22 of the lifting unit in a downward direction, for example to apply an additional force onto the mounted tool of implement. Both lower links 21, 22 move in a synchronous way during the operation of adjustment. For this function, the distributing valves 86, 87 have been switched to reach the locking position. The chambers 48, 80 of the successive cylinders 25, 26 at the side of the piston are subjected to pressure via the check valve 83 and the conduits 82, 81, the successive cylinders 25, 26 increasing in length. The pressure medium displaced from the chambers 50, 77 of the successive cylinders 25, 26 at the side of the piston rods flows to the chambers 47, 78 of the associated lifting cylinders 23,24 at the side of the piston such that the length of these cylinders is increased. The pressure medium displaced from the chambers 49, 75 of the lifting cylinders 23, 24 at the side of the piston rod flows to the container 72 via the distributing valve 74 in its passage position and the distributing valve 71.

### Eliminating a difference of strokes

When applying the function "pressing the lower link downwards", a difference of strokes is automatically cancelled in the lowermost position of the lower links 21, 22.

The connections A, B and T are interconnected in switching position IV. Again, two functions are available.

### Real floating position

Both lower links 21, 22 may pivot in a vertical direction independently form another. Due to the fact that the lower links are not guided by the rear axle of the farming tractor in a forced manner, the tool may adapt to unevenness of the ground in an optimal way. For this function, all distributing valves 74, 85, 86, 87 are switched into their passage position such that there is free diffusion of pressure medium between all cylinder chambers 47, 48, 49, 50, 75, 77, 78, 80 and the container 72.

### Lower the lower link:

For applying this function, all distributing valves 85, 86, 87 with the exception of the distributing valve 74 are switched into the locking position. The pressure medium which is subject to pressure corresponding to the weight of the tool, and which is located in the chambers 49, 75 of the lifting cylinders 23, 24 at the side of the piston rod may flow to the chambers 48, 80 of the successive cylinders 25, 26 at the side of the piston under free diffusion via the distributing valve 74 and the distributing valve 71.

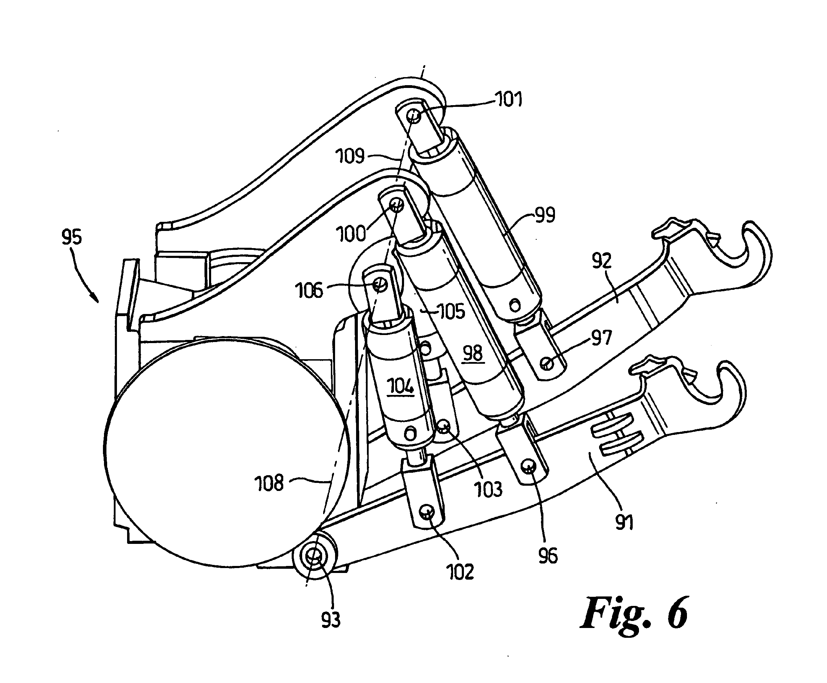

In the exemplary embodiment of a lifting unit according to Fig. 6, the lower links 91, 92 are connected to the rear 95 of the vehicle by joints 93. A lifting cylinder 98, 99 engages at each lower link 91, 92 at the points of engagement 96, 97. The lifting cylinder 98, 99 is supported at the rear 95 by a joint 100, 101. A successive or assist cylinder 104, 105 is pivotally connected at sufficient distance to the lifting cylinders 98, 99 and parallel thereto at their sides facing the vehicle and at the points of engagement 102, 103 to the lower links 91, 92. The points of engagement 102, 103 are located on the line connecting the joints 93 and the points of engagement 96, 97. Connection of the successive cylinders 104, 105 at the side of the vehicle is realised by a joint 106 being located on the connecting line 108, 109 of the joint 100, 101 of the lifting cylinder and the joint 93 of the lower links 91, 92. In this way, the lower links 91, 92 may pivot into a horizontal plane in all pivotal positions without tensions occurring in the lifting unit. Actuation of the lifting cylinders 98, 99 and the successive cylinders 104, 105 of this lifting unit is realised in a way corresponding to the actuation of the cylinder of the lifting unit according to Fig. 2. Again, it is essential that the successive cylinder 105 of the lifting cylinder 98 together with the lifting cylinder 98 engages the lower link 91. The pressure medium being displaced from the lifting cylinders 98, 99 into the successive cylinders 104, 105 during the pivotal movement of the lower links 91, 92 in this way effects absolute synchronous movement of the lower links 91, 92. However, it has to be taken into account that, for example, the cylinders 98, 104 engaging the lower link 91 have to fulfil different strokes during its pivotal movement. This fact is taken into account by a respective choice of, for example, the outer diameter of the successive cylinder 104.

## Claims

1. A hitch assembly comprising a pair of spaced apart lower links (2,3), each lower link having respective first and second ends, wherein the first end is pivotally attached to a lower link mount (6) and wherein the second end is free and includes an attachment member (4,5), a pair of spaced apart lift actuators (11,12) connected one to each link, the assembly being **characterised in that** a pair of spaced apart assist actuators (15,16) are also connected one to each link, wherein one of the lift actuators and one of the assist actuators are each associated with the first lower link and the other lift actuator and assist actuator are each associated with the second lower link, the lift actuator (11) associated with the first lower link (2) being hydraulically connected in series with the assist actuator (16) associated with the second lower link (3), and the lift actuator associated (12) with the second lower link (3) being hydraulically connected in series with the assist actuator (15) associated with the first lower link (2).

2. A hitch assembly according to Claim 1, wherein lift actuator (11,12) and assist actuator (15,16) associated with a respective one of the lower links are arranged mechanically in a series, thereby summing their working strokes.

3. A hitch assembly according to Claim 2, wherein the lift actuator (11,12) and assist actuator (15,16) associated with a respective lower link are connected by a transmitting element (9,10) which transmits any change of length of the lift actuator to its associated assist actuator.

4. A hitch assembly according to Claims 2 or 3, wherein the lift and assist actuator are hydraulic rams (23,24:25,26) each comprising a piston (38,39:89,90) and a cylinder, said actuators having a common axis and forming a hydraulic cylinder unit (27,28).

5. A hitch assembly according to Claim 4 wherein associated lift and assist actuators (23,24:25,26) are fixedly interconnected by a common intermediate plate (29,30) including integrated inlet/outlet bores (43,44:45,46) to form a integrated hydraulic cylinder unit (27,28).

6. A hitch assembly according to Claim 4 or 5, wherein each hydraulic cylinder unit (27,28) includes a piston rod (40,41), respective ends of the piston rod exiting at opposite sides of the cylinder unit and including coupling means (34,42) for pivotal connection with the vehicle carrying said hitch and the lower links respectively.

7. A hitch assembly according to Claim 4, wherein the lift actuator (55) and the assist actuator (56) are fixedly interconnected by a common piston rod (58) to form the cylinder unit (57).

8. A hitch assembly according to Claim 7, wherein the piston rod (58) at each of its ends carries a piston (59,60), and wherein coupling means (63,64) for pivotal connection of the cylinder unit with the vehicle and with the lower links, are arranged at opposite ends of the cylinder unit (57) respectively.

9. A hitch according to Claim 3, wherein the transmitting element is a lever (9,10) pivotally mounted at one end thereof (7,8) to the vehicle (1) and to which a lift actuator (11,12) is coupled at a distance from the pivot mount and to which the assist actuator (15,16) is coupled at the same or a greater distance from the pivot mount.

10. A hitch assembly according to Claim 1, wherein the lift (98,99) and assist (104,105) actuators are supported at the rear of the vehicle (95), and the force generated by associated lift and assist actuators is summed.

11. A hitch assembly according to Claim 10, wherein associated lift (98,99) and assist (104,105) actuators are each pivotally attached at a first end (96,97:102,103) to a lower link (91,92) and at a second end (100,101:106) to the vehicle (95), wherein the pivotal attachment (93) of the lower link to the vehicle and the pivotal attachments (106:100,101) of the associated lift and assist actuators to the vehicle (95) are substantially aligned (108,109).

12. A hitch assembly according to Claim 11, wherein the pivotal attachments (96,97:102,103) of the actuators (98,99:104,105) to the lower links (91,92), and the pivotal attachment (93) of the lower link to the vehicle (95) are substantially aligned.

13. A hitch assembly according to any one of the claims 1 to 12 having a hydraulic control arrangement for the actuators comprising:
- a four way distributor valve (71) having four switching positions (I,II,III,IV) and four connections (A,B,P,T), the four way valve (71) being arranged between on the one side conduits (88,82) connected with the actuators and on the other side a pump (70) and a hydraulic fluid container (72);
- a second distributor valve (86) for connecting and disconnecting one conduit (88) with a piston head chamber (47) of the lift actuator (23) of the first link (21) and with a piston rod chamber (77) of the assist actuator (28) of the second link (22);
- a third distributor valve (87) for connecting and disconnecting said one conduit (88) with a piston head chamber (78) of the lift actuator (24) of the second link and with a piston rod chamber (50) of the assist actuator (27) of the first link (21);
- a fourth distributor valve (74) for connecting and disconnecting the piston rod chambers (49, 75) of the lift actuators (23,24) with said one conduit (88); and
- a fifth distributor valve (85) for connecting and disconnecting the other conduit (83), which is connected with the piston head chambers (48,80) of the assist actuators (27,28), with the fluid container (72) by bypassing the four way distributor valve (71).

## Patentansprüche

1. Kupplungs- oder Anbaubaugruppe mit einem Paar voneinander beabstandeter unterer Verbindungselemente (2, 3), die jeweils ein erstes und ein zweites Ende besitzen, wobei das erste Ende verschwenkbar an einer unteren Verbindungselement-Befestigung (6) befestigt ist und wobei das zweite Ende frei ist und ein Befestigungselement (4, 5) besitzt, und mit einem Paar beabstandeter Hebe-Aktuatoren (11, 12), die jeweils mit einem Verbindungselement verbunden sind, **dadurch gekennzeichnet, dass** ein Paar beabstandeter Hilfs-Aktuatoren (15, 16) ebenfalls jeweils mit einem Verbindungselement verbunden ist, wobei einer der Hebe-Aktuatoren und einer der Hilfs-Aktuatoren jeweils dem ersten unteren Verbindungselement zugeordnet sind und der andere Hebe-Aktuator und der Hilfs-Aktuator jeweils dem zweiten unteren Verbindungselement zugeordnet sind, wobei der Hebe-Aktuator (11), der dem ersten unteren Verbindungselement (2) zugeordnet ist, hydraulisch in Reihe verbunden ist mit dem Hilfs-Aktuator (16), der dem zweiten unteren Verbindungselement (3) zugeordnet ist, und wobei der Hebe-Aktuator (12), der dem zweiten unteren Verbindungselement (3) zugeordnet ist, hydraulisch in Reihe mit dem Hilfs-Aktuator (15), der dem ersten unteren Verbindungselement (2) zugeordnet ist, verbunden ist.

2. Kopplungs- oder Anbaubaugruppe nach Anspruch 1, **dadurch gekennzeichnet, dass** der Hebe-Aktuator (11, 12) und der Hilfs-Aktuator (15, 16), die jeweils einem der unteren Verbindungselemente zugeordnet sind, mechanisch in Reihe angeordnet sind, so dass sich deren Arbeitshübe oder Arbeitskräfte überlagern oder addieren.

3. Kopplungs- oder Anbaubaugruppe nach Anspruch 2, **dadurch gekennzeichnet, dass** der Hebe-Aktuator (11, 12) und der Hilfs-Aktuator (15, 16), die jeweils einem unteren Verbindungselement zugeordnet sind, über ein übertragendes Element (9, 10) verbunden sind, welches eine Veränderung der Länge des Hebe-Aktuators auf den zugeordneten Hilfs-Aktuator überträgt.

4. Kopplungs- oder Anbaubaugruppe nach Anspruch 2 oder 3, **dadurch gekennzeichnet, dass** der Hebe-Aktuator und der Hilfs-Aktuator hydraulische Einheiten (23, 24: 25, 26) sind, die jeweils einen Kolben (38, 39: 89, 90) und einen Zylinder aufweisen, wobei die Aktuatoren eine gemeinsame Achse besitzen und eine hydraulische Zylindereinheit (27, 28) bilden.

5. Kopplungs- oder Anbaubaugruppe nach Anspruch 4, **dadurch gekennzeichnet, dass** zugeordnete Hebe- und Hilfs-Aktuatoren (23, 24: 25, 26) fest miteinander verbunden sind durch eine gemeinsame Zwischenplatte (29, 30), die integrierte Einlass/Auslass-Bohrungen (43, 44: 45, 46) besitzt zur Bildung einer integrierten hydraulischen Zylindereinheit (27, 28).

6. Kopplungs- oder Anbaubaugruppe nach Anspruch 4 oder 5, **dadurch gekennzeichnet, dass** jede hydraulische Zylindereinheit (27, 28) eine Kolbenstange (40, 41) aufweist, wobei jeweils die Enden der Kolbenstange auf gegenüberliegenden Seiten der Zylindereinheit austreten, wobei Kopplungsmittel (34, 42) vorgesehen sind zur schwenkbaren Verbindung mit den unteren Verbindungselementen und mit dem Fahrzeug, welches die Kopplungs- oder Anbaubaugruppe trägt.

7. Kopplungs- oder Anbaubaugruppe nach Anspruch 4, **dadurch gekennzeichnet, dass** der Hebe-Aktuator (55) und der Hilfs-Aktuator (56) über eine gemeinsame Kolbenstange (58) fest miteinander verbunden sind zur Bildung der Zylindereinheit (57).

8. Kopplungs- oder Anbaubaugruppe nach Anspruch 7, **dadurch gekennzeichnet, dass** die Kolbenstange (58) an jedem der Enden einen Kolben (59, 60) trägt und jeweils an gegenüberliegenden Enden der Zylindereinheit (57) Kopplungsmittel (63, 64), die einer schwenkbaren Verbindung der Zylindereinheit mit dem Fahrzeug und mit den unteren Verbindungselementen dienen, angeordnet sind.

9. Kopplungs- oder Anbaubaugruppe nach Anspruch 3, **dadurch gekennzeichnet, dass** das übertragende Element ein Hebel (9,10) ist, der schwenkbar an einem Ende desselben (7, 8) mit dem Fahrzeug (1) montiert ist und mit dem ein Hebe-Aktuator (11, 12) gekoppelt ist mit einem Abstand von der Schwenk-Befestigung und gegenüber dem der Hilfs-Aktuator (15, 16) bei demselben oder einem größeren Abstand von der Schwenk-Befestigung gekoppelt ist.

10. Kopplungs- oder Anbaubaugruppe nach Anspruch 1, **dadurch gekennzeichnet, dass** die Hebe-Aktuatoren (98, 99) und die Hilfs-Aktuatoren (104, 105) an der Rückseite des Fahrzeugs (95) abgestützt sind und dass die Kraft, die durch die zugeordneten Hilfs- und Hebe-Aktuatoren erzeugt wird, überlagert oder aufsummiert wird.

11. Kopplungs- oder Anbaubaugruppe nach Anspruch 10, **dadurch gekennzeichnet, dass** die zugeordneten Hilfs- und Hebe-Aktuatoren (98, 99: 104. 105) jeweils verschwenkbar mit einem ersten Ende (96, 97: 102, 103) an einem unterem Verbindungselement (91, 92) und mit einem zweiten Ende (100, 101: 106) an dem Fahrzeug (95) befestigt sind, wobei die Schwenk-Befestigung (93) des unteren Verbindungselements mit dem Fahrzeug und die Schwenk-Befestigungen (106: 100, 101) der zugeordneten Hebe- und Hilfs-Aktuatoren mit dem Fahrzeug (95) grundsätzlich zueinander ausgerichtet (108, 109) oder koaxial zueinander angeordnet sind.

12. Kopplungs- oder Anbaubaugruppe nach Anspruch 11, **dadurch gekennzeichnet, dass** die verschwenkbaren Befestigungen (96, 97: 102, 103) der Aktuatoren (98, 99: 104, 105) mit den unteren Verbindungselementen (91, 92) und die verschwenkbare Befestigung (93) des unteren Verbindungselements mit dem Fahrzeug (95) substantiell zueinander ausgerichtet sind oder koaxial zueinander angeordnet sind.

13. Kopplungs- oder Anbaubaugruppe nach einem der Ansprüche 1 bis 12 mit einer hydraulischen Steuer- oder Regeleinrichtung für die Aktuatoren mit:
- einem Vier-Wege-Verteü-Ventil (71), welches vier Schaltpositionen (I, II, III, IV) und vier Verbindungen (A, B, P, T) besitzt, wobei das Vier-Wege-Ventil (71) auf einer Seite zwischen Leitungen (88, 82), die mit den Aktuatoren verbunden sind, und auf der anderen Seite zwischen einer Pumpe (70) und einem hydraulischen Behälter (72) für Fluid angeordnet ist;
- einem zweiten Verteil-Ventil (86) zum Verbinden und Trennen einer Leitung (88) mit und von einer kopfseitigen Kammer (47) eines Kolbens des Hebe-Aktuators (23) des ersten Verbindungselements (21) und mit einer Kolbenstangen-Kammer (77) des Hilfs-Aktuators (28) des zweiten Verbindungselements (22);
- einem dritten Verteil-Ventil (87) zum Verbinden und Trennen der Leitung (88) mit und von einer kopfseitigen Kammer (78) des Kolbens des Hebe-Aktuators (24) des zweiten Verbindungselements und mit einer Kolbenstangen-Kammer (50) des Hilfs-Aktuators (27) des ersten Verbindungselements (21);
- einem vierten Verteil-Ventil (74) zum Verbinden und Trennen der Kolbenstangen-Kammern (49, 75) der Hebe-Aktuatoren (23, 24) mit und von der einen Leitung (88); und
- einem fünften Verteil-Ventil (85) zum Verbinden und Trennen der anderen Leitung (83), die mit den kopfseitigen Kammern (48, 80) des Kolbens der Hilfs-Aktuatoren (27, 28) verbunden ist, mit oder von dem Behälter (72) für Fluid durch einen Bypass bezüglich des Vier-Wege-Verteil-Ventils (71).

## Revendications

1. Ensemble d'accrochage comprenant une paire de bielles inférieures espacées (2, 3), chaque bielle inférieure comportant des première et seconde extrémités respectives, dans lequel la première extrémité est fixée de manière à pouvoir pivoter sur un bloc de montage de bielle inférieur (6) et dans lequel la seconde extrémité est libre et comporte un élément de liaison (4, 5), une paire d'actionneurs de levage espacés (11, 12) reliés chacun à une bielle, l'ensemble étant **caractérisé en ce qu'**une paire d'actionneurs d'assistance espacés (15, 16) sont également reliés chacun à une bielle, dans lequel l'un des actionneurs de levage et l'un des actionneurs d'assistance sont associés chacun à la première bielle inférieure et les autres actionneur de levage et actionneur d'assistance sont associés chacun à la deuxième bielle inférieure, l'actionneur de levage (11) associé à la première bielle inférieure (2) étant couplé hydrauliquement en série à l'actionneur d'assistance (16) associé à la deuxième bielle inférieure (3), et l'actionneur de levage (12) associé à la deuxième bielle inférieure (3) étant couplé hydrauliquement en série à l'actionneur d'assistance (15) associé à la premier bielle inférieure (2).

2. Ensemble d'accrochage selon la revendication 1, dans lequel l'actionneur de levage (11, 12) et l'actionneur d'assistance (15, 16) associé à l'une respectives des bielles inférieures sont agencés mécaniquement en série, additionnant de cette manière leur course utile.

3. Ensemble d'accrochage selon la revendication 2, dans lequel l'actionneur de levage (11, 12) et l'actionneur d'assistance (15, 16) associé à une bielle inférieure respective sont couplés par un élément de transmission (9, 10) qui transmet toute modification de la longueur de l'actionneur de levage à son actionneur d'assistance associé.

4. Ensemble d'accrochage selon les revendications 2 ou 3, dans lequel les actionneurs de levage et d'assistance sont des vérins hydrauliques (23, 24: 25, 26) comprenant chacun un piston (38, 39: 89, 90) et un cylindre, lesdits actionneurs présentant un axe commun et formant une unité de vérin hydraulique (27, 28).

5. Ensemble d'accrochage selon la revendication 4, dans lequel les actionneurs de levage et d'assistance associés (23, 24: 25, 26) sont couplés solidement entre eux par une plaque intermédiaire commune (29, 30) comportant des alésages d'entrée/sortie intégrés (43, 44: 45, 46) afin de former une unité de vérin hydraulique intégrée (27, 28).

6. Ensemble d'accrochage selon la revendication 4 ou 5, dans lequel chaque unité de vérin hydraulique (27, 28) comporte une tige de piston (40, 41), des extrémités respectives de la tige de piston sortant au niveau des côtés opposés de l'unité de vérin et comportant des moyens de couplage (34, 42) afin d'assurer le couplage pivotant respectivement avec le véhicule comportant ledit dispositif d'accrochage et les bielles inférieures.

7. Ensemble d'accrochage selon la revendication 4, dans lequel l'actionneur de levage (55) et l'actionneur d'assistance (56) sont couplés solidement entre eux par une tige de piston commune (58) afin de former l'unité de vérin (57).

8. Ensemble d'accrochage selon la revendication 7, dans lequel la tige de piston (58), à chacune de ses extrémités, supporte un piston (59, 60), et dans lequel des moyens de couplage (63, 64) destinés à assurer le couplage pivotant de l'unité de vérin avec le véhicule et avec les bielles inférieures, sont agencés respectivement au niveau des extrémités opposées de l'unité de vérin (57).

9. Ensemble d'accrochage selon la revendication 3, dans lequel l'élément de transmission est un levier (9, 10) monté de manière à pouvoir pivoter au niveau d'une première de ses extrémité (7, 8) sur le véhicule (1) et auquel un actionneur de levage (11, 12) est couplé à une certaine distance par rapport au bloc de montage pivot et auquel l'actionneur d'assistance (15, 16) est couplé à une distance identique ou supérieure par rapport au bloc de montage de pivot.

10. Ensemble d'accrochage selon la revendication 1, dans lequel les actionneurs de levage (98, 99) et d'assistance (104, 105) sont supportés à l'arrière du véhicule (95), et les efforts produits par les actionneurs de levage et d'assistance associés sont cumulés.

11. Ensemble d'accrochage selon la revendication 10, dans lequel les actionneurs de levage (98, 99) et d'assistance (104, 105) associés sont fixés chacun de manière à pouvoir pivoter au niveau d'une première extrémité (96, 97: 102, 103) sur une bielle inférieure (91, 92) et au niveau d'une deuxième extrémité (100, 101: 106) sur le véhicule (95), dans lequel la liaison pivotante (93) de la bielle inférieure sur le véhicule et les liaisons pivotantes (106: 100, 101) des actionneurs de levage et d'assistance associés sur le véhicule (95) sont sensiblement alignées (108, 109).

12. Ensemble d'accrochage selon la revendication 11, dans lequel les liaisons pivotantes (96, 97:102, 103) des actionneurs (98, 99:104, 105) sur les bielles inférieures (91, 92), et la liaison pivotante (93) de la bielle inférieure sur le véhicule (95) sont sensiblement alignées.

13. Ensemble d'accrochage selon l'une quelconque des revendications 1 à 12 comportant un agencement de commande hydraulique des actionneurs comprenant :
un distributeur hydraulique à quatre voies (71) présentant quatre positions de commutation (I, II, III, IV) et quatre raccordements (A, B, P, T), le distributeur à quatre voies (71) étant agencé entre, d'une part, des conduits (88, 82) reliés aux actionneurs et, d'autre part, une pompe (70) et un conteneur de fluide hydraulique (72) ;
un deuxième distributeur hydraulique (86) destiné à coupler et à séparer un premier conduit (88) par rapport à une chambre de tête de piston (47) de l'actionneur de levage (23) de la première bielle (21) et à une chambre de tige de piston (77) de l'actionneur d'assistance (28) de la deuxième bielle (22) ;
un troisième distributeur hydraulique (87) destiné à coupler et à séparer ledit premier conduit (88) par rapport à une chambre de tête de piston (78) de l'actionneur de levage (24) de la deuxième bielle et à une chambre de tige de piston (50) de l'actionneur d'assistance (27) de la première bielle (21) ;
un quatrième distributeur hydraulique (74) destiné à coupler et à séparer les chambres de tige de piston (49, 75) des actionneurs de levage (23, 24) par rapport audit premier conduit (88) ; et
un cinquième distributeur hydraulique (85) destiné à coupler et à séparer l'autre conduit (83), qui est relié aux chambres de tête de piston (48, 80) des actionneurs d'assistance (27, 28), par rapport au conteneur de fluide (72) en contournant le distributeur hydraulique à quatre voies (71).
